# FASCICULE DE BREVET EUROPEEN

(11) **EP 3 528 676 B1**
(45) Date de publication et mention de la délivrance du brevet: **25.11.2020**
(21) Numéro de dépôt: 17797692.5
(22) Date de dépôt: 23.10.2017
(51) Int. Cl.: A47J 43/07, A47J 43/044

(54) **APPAREIL ÉLECTROMÉNAGER DE PRÉPARATION CULINAIRE CHAUFFANT PRÉSENTANT UN CONDUIT D'ÉVACUATION**
ERWÄRMENDES HAUSHALTSGERÄT ZUR NAHRUNGSZUBEREITUNG MIT EINER ABLEITUNG
HEATING HOUSEHOLD APPLIANCE FOR FOOD PREPARATION, HAVING A DISCHARGE DUCT

(30) Priorité: 24.10.2016 FR 1660293
(43) Date de publication de la demande: 28.08.2019
(73) Titulaire: SEB S.A., 69130 Ecully (FR)
(72) Inventeur: GIRAUD, Jean-Baptiste, 53810 Change (FR); GERARD, Emmanuel, 61410 Couterne (FR); SMIT, Robert, 65290 Louey (FR)
(74) Mandataire: SEB Developpement Brevets
(86) Numéro de dépôt international: PCT/FR2017/052910
(87) Numéro de publication internationale: WO 2018/078263

(56) Documents cités:
- CN-A- 104 414 517
- US-A- 3 739 938

## Description

La présente invention concerne le domaine technique des appareils électroménagers de préparation culinaire chauffants comportant un récipient de travail, un accessoire de travail rotatif agencé dans le récipient de travail, et un boîtier motorisé supérieur disposé au dessus du récipient de travail pour entraîner en rotation l'accessoire de travail rotatif selon un axe de rotation, dans lesquels un couvercle intermédiaire est agencé entre le récipient de travail et le boîtier motorisé supérieur.

Il est connu du document CN104414517 un appareil électroménager de préparation culinaire chauffant comportant un récipient de travail, un boîtier motorisé supérieur pour entraîner en rotation un accessoire de travail rotatif, un dispositif de chauffe électrique pour chauffer les aliments contenus dans le récipient de travail, une enceinte de travail étant définie par le récipient de travail et un couvercle intermédiaire, dans lequel le couvercle intermédiaire présente un conduit d'évacuation mettant en communication l'enceinte de travail avec l'extérieur de l'appareil. Toutefois dans ce document l'admission du conduit d'évacuation est reliée à l'évacuation du conduit d'évacuation par un simple coude débouchant directement sur l'extérieur de l'appareil. Cette construction génère un risque de projections hors de l'enceinte de travail.

Un objet de la présente invention est de proposer un appareil électroménager de préparation culinaire chauffant du type précité, qui présente une construction permettant d'éviter les projections de matières alimentaires, de liquides et/ou de vapeur hors de l'enceinte de travail.

Cet objet est atteint avec un appareil électroménager de préparation culinaire chauffant comportant un récipient de travail, un accessoire de travail rotatif disposé dans le récipient de travail, un boîtier motorisé supérieur pour entraîner en rotation l'accessoire de travail rotatif selon un axe de rotation, un dispositif de chauffe électrique pour chauffer les aliments contenus dans le récipient de travail, un couvercle intermédiaire porté par le récipient de travail, une enceinte de travail étant définie par le récipient de travail et le couvercle intermédiaire, le couvercle intermédiaire présentant un conduit d'évacuation mettant en communication l'enceinte de travail avec l'extérieur de l'appareil, le conduit d'évacuation comportant une admission communiquant avec l'enceinte de travail et une évacuation communiquant avec l'extérieur de l'appareil, du fait que l'évacuation débouche en regard d'une paroi latérale intérieure du récipient de travail à distance d'un échappement vers l'extérieur de l'appareil.

Si des matières alimentaires, des liquides et/ou de la vapeur sont propulsés dans le conduit d'évacuation sous l'effet d'une pression de vapeur régnant dans l'enceinte de travail, ces rejets sortant du conduit d'évacuation sont projetés contre la paroi latérale intérieure du récipient de travail. Ainsi ces rejets n'atteignent pas directement l'échappement vers l'extérieur de l'appareil. Il en résulte un simple débordement, et non une projection hors de l'appareil.

Selon une forme de réalisation avantageuse, l'échappement est ménagé entre le récipient de travail et le couvercle intermédiaire.

Cette disposition permet de simplifier la construction de l'appareil.

Avantageusement alors, le récipient de travail présente un bord supérieur présentant un décrochement supérieur ménageant l'échappement.

Cette disposition permet de faciliter le versement hors du récipient de travail.

Selon un mode de réalisation avantageux, l'appareil comporte une base recevant le récipient de travail et la base comporte un montant présentant un connecteur électrique de motorisation pour alimenter électriquement le boîtier motorisé supérieur.

Avantageusement alors, le décrochement supérieur est adjacent au montant.

Avantageusement encore, le décrochement supérieur s'étend de part et d'autre du montant.

L'échappement est ainsi formé par deux passages ménagés de part et d'autre du montant.

Avantageusement alors, le dispositif de chauffe électrique est porté par le récipient de travail et la base comporte un connecteur électrique de chauffe pour alimenter électriquement le dispositif de chauffe électrique lorsque le récipient de travail est disposé sur la base. En alternative, le dispositif de chauffe électrique pourrait notamment être porté par la base.

Avantageusement encore, l'évacuation débouche dans une paroi latérale extérieure du couvercle intermédiaire.

Cette disposition permet de protéger le boîtier motorisé supérieur des projections de matières alimentaires, de liquides et/ou de vapeur.

Avantageusement encore, le couvercle intermédiaire porte un organe de transmission rotatif entrainé en rotation par le boîtier motorisé supérieur et entraînant en rotation l'accessoire de travail rotatif disposé dans le récipient de travail.

Cette disposition permet de mieux protéger le boîtier motorisé supérieur des projections de matières alimentaires, de liquides et/ou de vapeur.

Avantageusement encore, le couvercle intermédiaire comprend un joint annulaire venant en appui périphérique à l'intérieur du récipient de travail et l'évacuation débouche au dessus du joint annulaire.

Cette disposition permet de mieux confiner les préparations liquides et la vapeur à l'intérieur de l'enceinte de travail.

Avantageusement alors, le joint annulaire comporte une lèvre annulaire venant en appui périphérique à l'intérieur du récipient de travail.

Cette disposition permet d'obtenir une bonne étanchéité entre le récipient de travail et le couvercle intermédiaire, même lorsque le récipient de travail présente des dispersions de construction importantes.

Avantageusement alors, le joint annulaire comporte une autre lèvre annulaire s'étendant au dessus de la lèvre annulaire.

Cette disposition permet de faciliter la mise en place du joint annulaire. Cette disposition contribue ainsi à l'obtention d'une bonne étanchéité entre le récipient de travail et le couvercle intermédiaire.

Avantageusement encore, le couvercle intermédiaire présente un autre conduit d'évacuation mettant en communication l'enceinte de travail avec l'extérieur de l'appareil, l'autre conduit d'évacuation comportant une autre admission communiquant avec l'enceinte de travail et une autre évacuation communiquant avec l'extérieur de l'appareil, l'autre évacuation débouchant en regard de la paroi latérale intérieure du récipient de travail à distance de l'échappement vers l'extérieur de l'appareil.

Cette disposition permet d'augmenter les possibilités d'évacuation hors de l'enceinte de travail.

Avantageusement alors, l'axe de rotation est agencé entre l'évacuation et l'autre évacuation.

Cette disposition permet d'améliorer les possibilités d'évacuation hors de l'enceinte de travail.

Avantageusement encore, l'autre évacuation débouche dans la paroi latérale extérieure du couvercle intermédiaire.

Cette disposition permet de protéger le boîtier motorisé supérieur des projections de matières alimentaires, de liquides et/ou de vapeur.

Avantageusement encore l'autre évacuation débouche au dessus du joint annulaire.

Cette disposition permet de mieux confiner les préparations liquides et la vapeur à l'intérieur de l'enceinte de travail.

Avantageusement encore, le récipient de travail présente un fond et comporte un organe de centrage s'élevant à partir du fond, et l'accessoire de travail rotatif est monté sur l'organe de centrage.

L'invention sera mieux comprise à l'étude d'un exemple de réalisation, pris à titre nullement limitatif, illustré dans les figures annexées, dans lesquelles :
- la figure 1 est une vue en perspective et en éclaté d'un exemple de réalisation d'un appareil électroménager de préparation culinaire selon l'invention,
- la figure 2 est une vue en coupe verticale de l'appareil électroménager de préparation culinaire illustré sur la figure 1, dans une configuration de rangement,
- la figure 3 est une vue en coupe verticale de l'appareil électroménager de préparation culinaire illustré sur la figure 1, dans une configuration d'utilisation, la base n'étant pas représentée,
- la figure 4 est une vue en élévation de l'appareil électroménager de préparation culinaire illustré sur la figure 1, dans une configuration assemblée,
- les figures 5 et 6 sont deux vues en perspective de côté et de dessus de la base de l'appareil électroménager de préparation culinaire illustré sur la figure 1,
- les figures 7 et 8 sont deux vues en perspective de côté et de dessous du récipient de travail de l'appareil électroménager de préparation culinaire illustré sur la figure 1,
- les figures 9 à 13 sont des vues en perspective de dessus, de dessous et de côté du couvercle intermédiaire de l'appareil électroménager de préparation culinaire illustré sur la figure 1,
- la figure 14 est une vue de dessus du récipient de travail illustré sur les figures 7 et 8 portant le couvercle intermédiaire illustré sur les figures 9 à 13,
- la figure 15 est une vue partielle en élévation et en coupe du récipient de travail illustré sur les figures 7 et 8 portant le couvercle intermédiaire illustré sur les figures 9 à 13, selon une première orientation,
- la figure 16 est une vue en élévation et en coupe du récipient de travail illustré sur les figures 7 et 8 portant le couvercle intermédiaire illustré sur les figures 9 à 13, selon une deuxième orientation,
- les figures 17 et 18 sont des vues en perspective de dessous et de dessus du boîtier motorisé supérieur de l'appareil électroménager de préparation culinaire illustré sur la figure 1.

L'appareil électroménager de préparation culinaire illustré sur les figures comporte une base 1, un récipient de travail 2, un couvercle intermédiaire 3, un boîtier motorisé supérieur 4, ainsi que des accessoires de préparation 5.

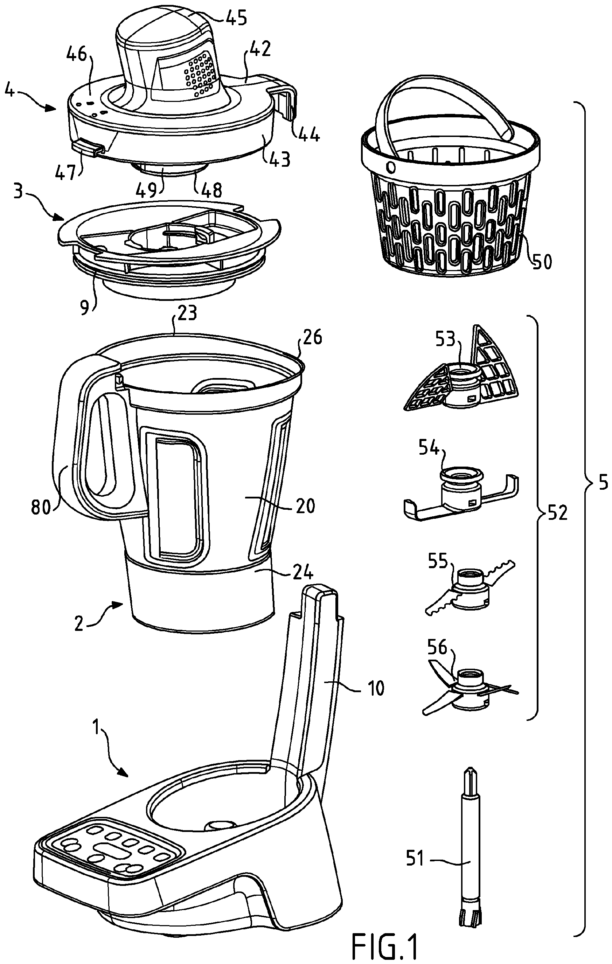

Tel que représenté sur la figure 1, les accessoires de préparation 5 comprennent un panier vapeur 50, un moyeu 51, et des outils de travail rotatifs 52 interchangeables. Les outils de travail rotatifs 52 comprennent un outil émulsionneur 53, un outil de mélange 54, un outil couteau denté 55 et un outil couteau coupant 56.

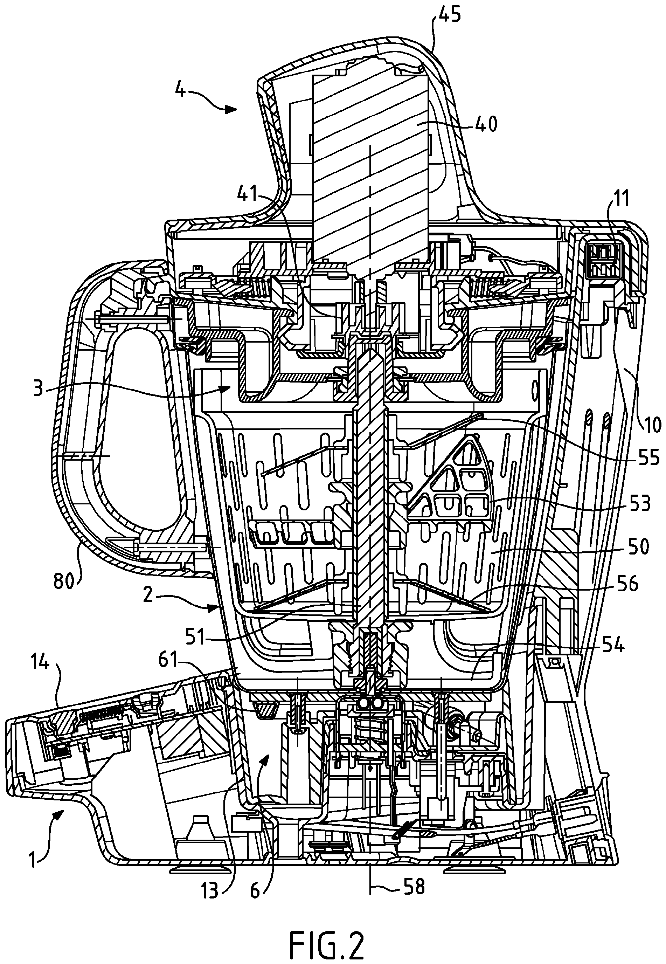

Les accessoires de préparation 5 peuvent être rangés dans le récipient de travail 2, tel que montré sur la figure 2.

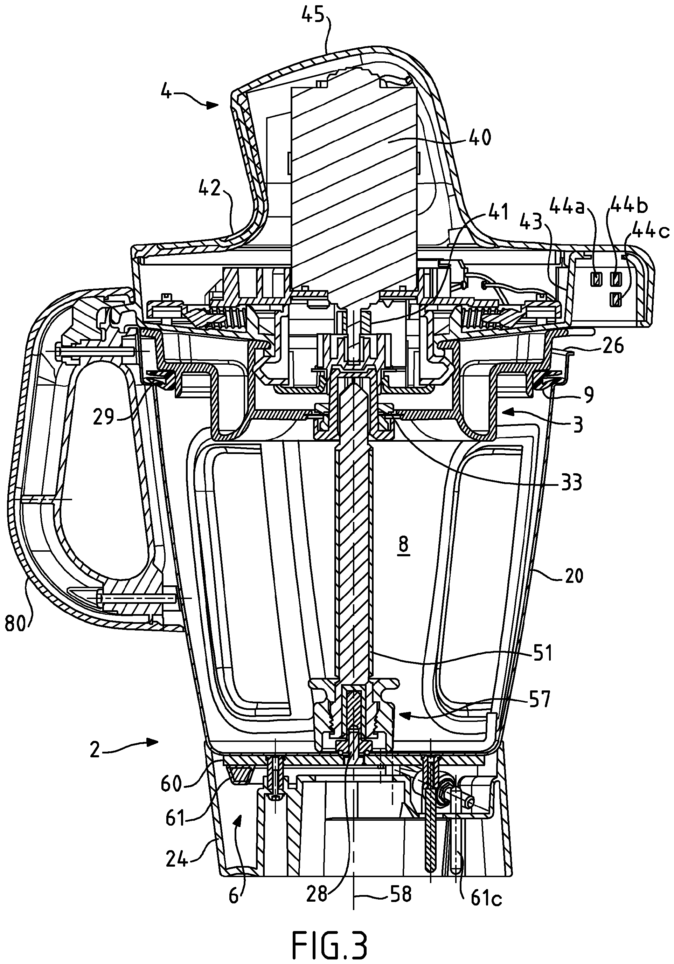

En configuration d'utilisation, l'appareil électroménager de préparation culinaire comporte un accessoire de travail rotatif 57 disposé dans le récipient de travail 2, tel que montré sur la figure 3. Le boîtier motorisé supérieur 4 est disposé sur le récipient de travail 2 pour entraîner en rotation l'accessoire de travail rotatif 57 selon un axe de rotation 58.

Dans l'exemple de réalisation illustré sur les figures, chacun des outils de travail rotatifs 52 peut être monté sur le moyeu 51 pour former l'accessoire de travail rotatif 57.

Le récipient de travail 2 présente un fond 25. Le récipient de travail 2 comporte un organe de centrage 28 s'élevant à partir du fond 25. Tel que visible sur la figure 3, l'accessoire de travail rotatif 57 est monté sur l'organe de centrage 28.

Le récipient de travail 2 porte le couvercle intermédiaire 3.

Selon une forme de réalisation avantageuse, le couvercle intermédiaire 3 comprend un joint annulaire 9, mieux visible sur la figure 3. Le joint annulaire 9 vient en appui périphérique à l'intérieur du récipient de travail 2.

L'appareil électroménager de préparation culinaire selon l'invention comprend une enceinte de travail 8 définie par le récipient de travail 2 et le couvercle intermédiaire 3.

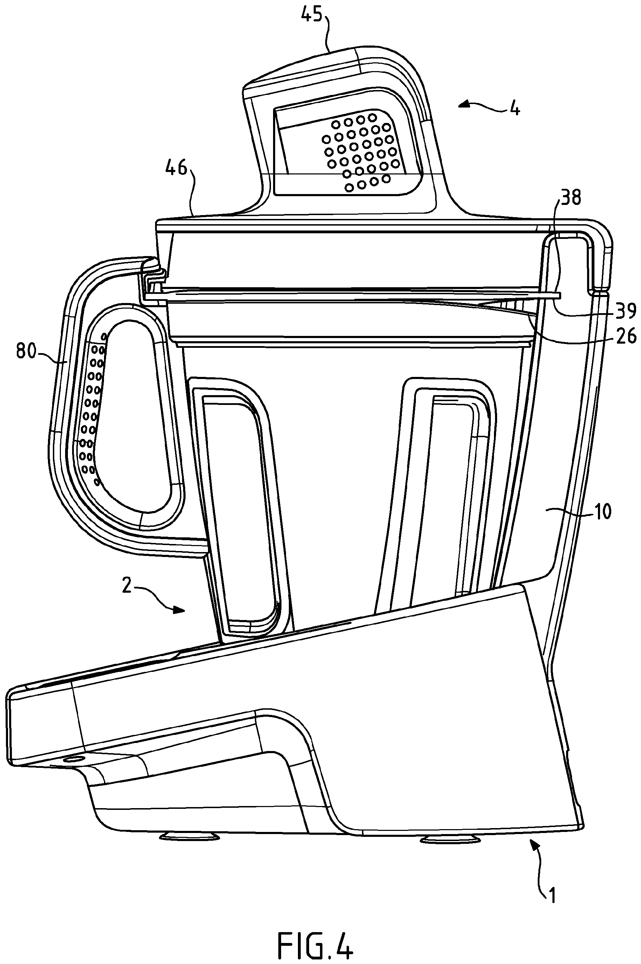

Le boîtier motorisé supérieur 4 est disposé sur le couvercle intermédiaire 3. La base 1 reçoit le récipient de travail 2, tel que montré sur la figure 4.

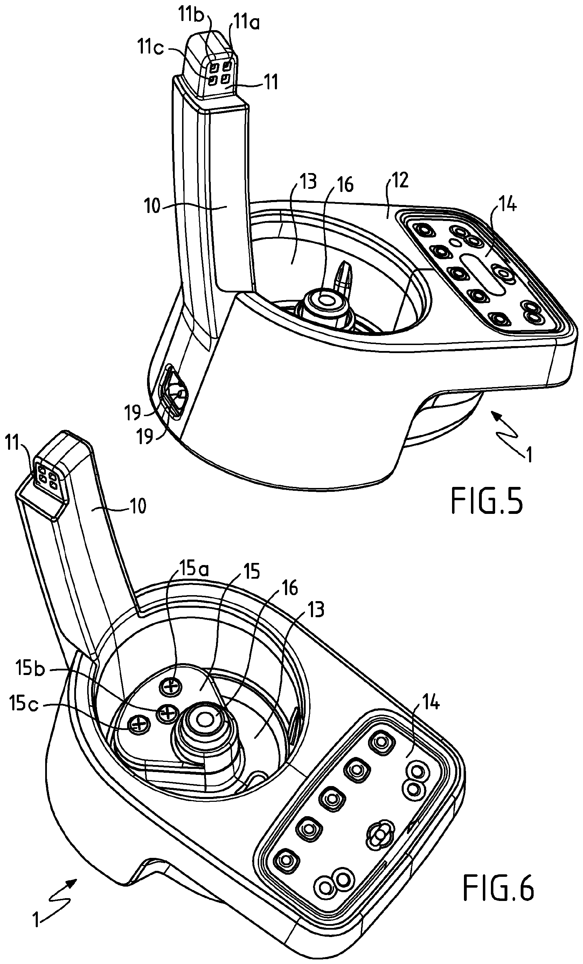

La base 1 comporte un montant 10, mieux visible sur les figures 5 et 6. Le montant 10 présente un connecteur électrique de motorisation 11 pour alimenter le boîtier motorisé supérieur 4. Le connecteur électrique de motorisation 11 est agencé latéralement dans le montant 10. Le connecteur électrique de motorisation 11 comporte trois douilles latérales 11a, 11b, 11c disposées dans une paroi latérale de la partie supérieure du montant 10. Les douilles latérales 11a, 11b, 11c présentent une entrée latérale agencée tangentiellement par rapport à l'axe de rotation 58.

La base 1 forme un socle 12 recevant le récipient de travail 2. A cet effet la base 1 présente une empreinte 13 ménagée dans le socle 12 pour recevoir la partie inférieure du récipient de travail 2. La base 1 présente un tableau de commande 14 disposé sur le socle 12. La partie supérieure du socle 12 est relevée en direction du montant 10. La partie supérieure du socle 12 est plane et entoure l'empreinte 13. Le montant 10 est agencé à l'opposé du tableau de commande 14 par rapport à l'empreinte 13.

L'appareil électroménager de préparation culinaire selon l'invention comporte avantageusement un dispositif de chauffe électrique 6 pour chauffer les aliments contenus dans le récipient de travail 2.

Dans l'exemple de réalisation illustré sur les figures, le dispositif de chauffe électrique 6 est porté par le récipient de travail 2. Le récipient de travail 2 est monté amovible sur la base 1. A cet effet, la base 1 comporte un connecteur électrique de chauffe 15, mieux visible sur la figure 6, pour alimenter le dispositif de chauffe électrique 6 lorsque le récipient de travail 2 est disposé sur la base 1. Le connecteur électrique de chauffe 15 comporte trois douilles supérieures 15a, 15b, 15c disposées dans l'empreinte 13. Les douilles supérieures 15a, 15b, 15c présentent une entrée supérieure agencée parallèlement à l'axe de rotation 58.

La base 1 comporte également un dispositif de contrôle de température comportant un capteur 16 prévu pour venir en contact avec le récipient de travail 2 disposé sur la base 1. Plus particulièrement dans l'exemple de réalisation illustré sur les figures, le capteur 16 est agencé dans l'empreinte 13. La base 1 présente des broches d'alimentation 19, visibles sur la figure 5, prévues pour recevoir un cordon d'alimentation électrique, non représenté.

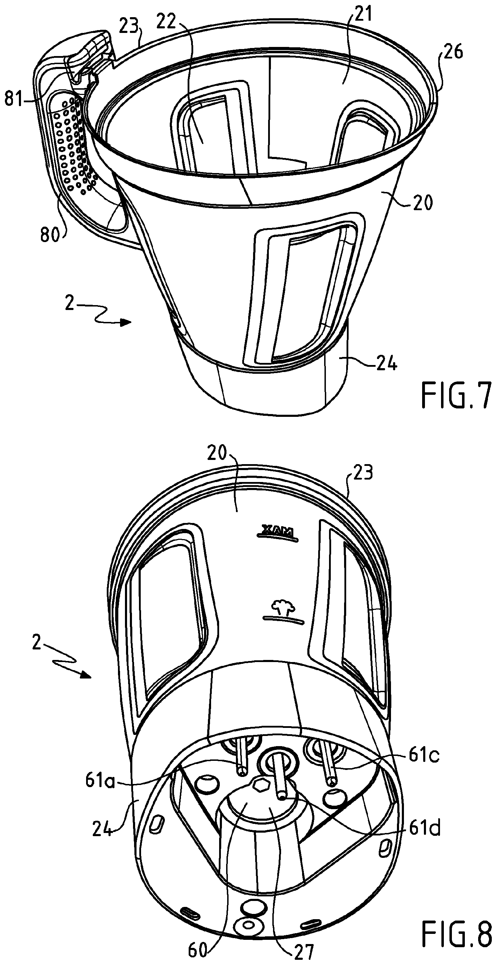

Le récipient de travail 2 illustré sur les figures 7 et 8 comporte un réceptacle 20 présentant une paroi latérale intérieure 21. Le réceptacle 20 est avantageusement réalisé en métal, de préférence en acier inoxydable. La paroi latérale intérieure 21 comporte des nervures internes 22. Le récipient de travail 2 présente un bord supérieur 23. Le bord supérieur 23 du récipient de travail 2 présente un décrochement supérieur 26, mieux visible sur la figure 3. Le récipient de travail 2 comporte une poignée 80. La poignée 80 est montée sur le réceptacle 20. Le décrochement supérieur 26 est agencé à l'opposé de la poignée 80.

Le récipient de travail 2 comporte une plaque de diffusion thermique 60 agencée sous le réceptacle 20. La plaque de diffusion thermique 60 est avantageusement réalisée en aluminium. Le récipient de travail 2 comporte une embase 24 prévue pour reposer sur la base 1. L'embase 24 est montée sous le réceptacle 20. Tel que représenté sur la figure 2, l'embase 24 est engagée dans l'empreinte 13 lorsque le récipient de travail 2 est en place sur la base 1. La paroi latérale intérieure 21 présente un décrochement annulaire 29.

Dans l'exemple de réalisation illustré sur les figures, le dispositif de chauffe électrique 6 est formé par un élément chauffant blindé 61 fixé sous la plaque de diffusion thermique 60. La plaque de diffusion thermique 60 est agencée sous le réceptacle 20. Tel que visible sur la figure 8, trois broches inférieures 61a, 61b, 61c sont issues de l'embase 24. Deux des broches inférieures 61a, 61b, 61c sont reliées aux bornes de l'élément chauffant blindé 61 et la troisième formant la terre est reliée au réceptacle 20 et/ou à la plaque de diffusion thermique 60.

Tel que visible sur les figures 3 et 8, l'embase 24 présente une ouverture 27 laissant apparaître le fond 25. L'ouverture 27 est prévue pour le passage du capteur 16. Tel que visible sur la figure 2, le capteur 16 vient en contact avec le fond 25 du récipient de travail 2. Le capteur 16 est agencé en position centrale par rapport au fond 25 du récipient de travail 2. L'axe de rotation 58 passe par le capteur 16.

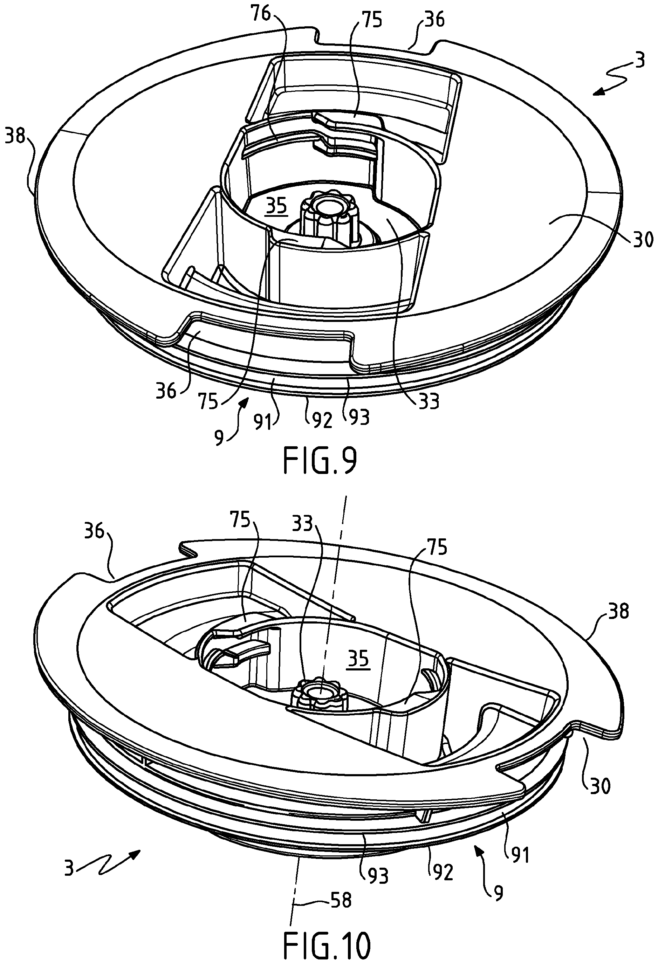

Le couvercle intermédiaire 3 comporte un corps 30 s'étendant autour de l'axe de rotation 58, tel que représenté sur les figures 9 et 10. Le corps 30 présente un logement central 35 s'étendant autour de l'axe de rotation 58. Le logement central 35 présente deux collerettes internes 75 prévues pour un verrouillage par baïonnette avec le boîtier motorisé supérieur 4. Le couvercle intermédiaire 3 présente deux organes de retenue 76 agencés dans le logement central 35. Les organes de retenue 76 et les collerettes internes 75 sont agencés de manière opposée. Les organes de retenue 76 sont décalés axialement et latéralement par rapport aux collerettes internes 75.

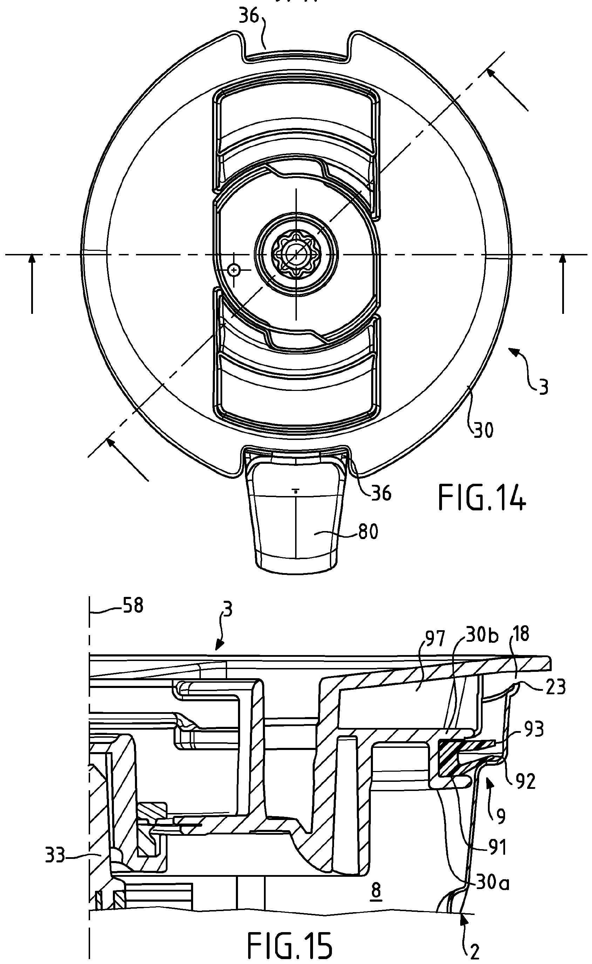

Le couvercle intermédiaire 3 est bloqué en rotation par rapport au récipient de travail 2. A cet effet le corps 30 présente deux échancrures périphériques 36. L'une des échancrures périphériques 36 reçoit la poignée 80, tel que montré sur la figure 14, et l'autre reçoit le montant 10. De préférence chacune des échancrures périphériques 36 est prévue pour recevoir indifféremment la poignée 80 ou le montant 10.

Le couvercle intermédiaire 3 comporte une bordure extérieure 38 présentant une partie inférieure 39 apparente lorsque le boîtier motorisé supérieur 4 est disposé sur le couvercle intermédiaire 3.

Selon une forme de réalisation préférée, le couvercle intermédiaire 3 porte un organe de transmission rotatif 33. Tel que montré sur la figure 3, l'organe de transmission rotatif 33 est entrainé en rotation par le boîtier motorisé supérieur 4 et entraîne en rotation l'accessoire de travail rotatif 57 disposé dans le récipient de travail 2. Le logement central 35 entoure l'organe de transmission rotatif 33. A titre de variante, le boîtier motorisé supérieur 4 pourrait directement entraîner en rotation l'accessoire de travail rotatif 57, le couvercle intermédiaire 3 présentant alors un passage axial libre.

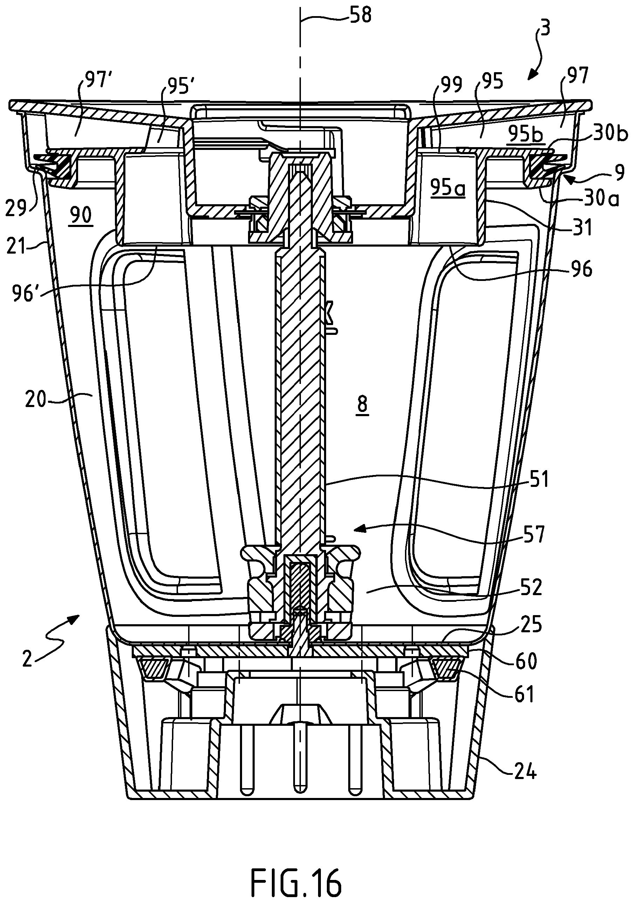

Le couvercle intermédiaire 3 présente un conduit d'évacuation 95 mettant en communication l'enceinte de travail 8 avec l'extérieur de l'appareil, tel que visible sur les figures 16 et 15. De préférence, la section du conduit d'évacuation reste en tout point supérieure à 1 cm², avec une largeur supérieure à 4 mm, pour éviter que les aliments ne bouchent le conduit d'évacuation. Le conduit d'évacuation 95 traverse le corps 30 du couvercle intermédiaire 3. Le couvercle intermédiaire 3 présente une paroi latérale déflectrice 31 s'étendant à distance de la paroi latérale intérieure 21 du récipient de travail 2, tel que visible sur la figure 16.

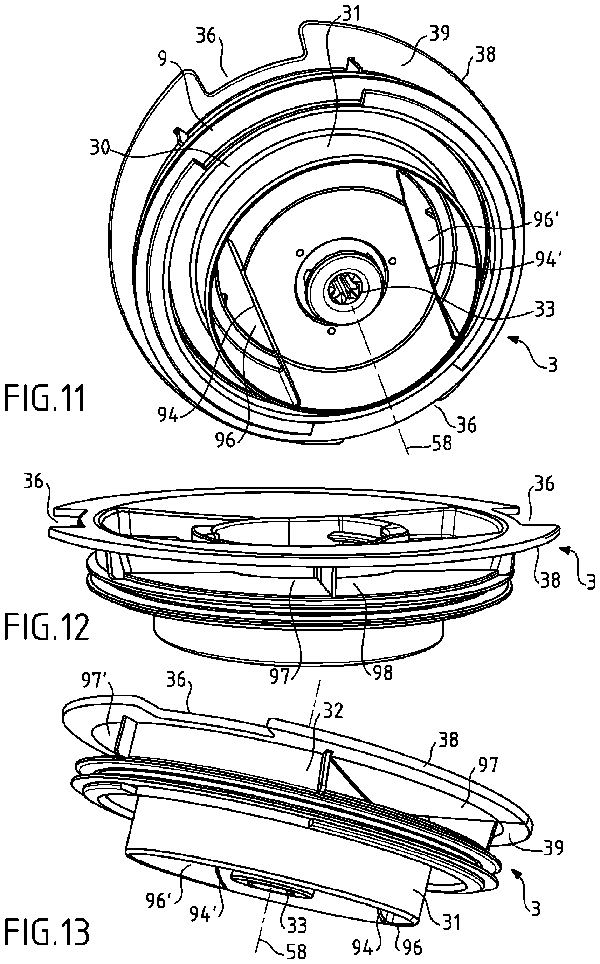

Plus particulièrement dans l'exemple de réalisation illustré sur les figures, la paroi latérale déflectrice 31 est annulaire et s'étend autour de l'axe de rotation 58, tel que bien visible sur les figures 11 et 13. La paroi latérale déflectrice 31 ménage un espace annulaire 90 avec la paroi latérale intérieure 21 du récipient de travail 2.

Le conduit d'évacuation 95 comporte une admission 96, visible sur les figures 11, 13 et 16, et une évacuation 97, visible sur les figures 12, 13 et 15.

Tel que bien visible sur la figure 16, l'admission 96 du conduit d'évacuation 95 communique avec l'enceinte de travail 8. La paroi latérale déflectrice 31 est agencée entre la paroi latérale intérieure 21 du récipient de travail 2 et l'admission 96. L'admission 96 est agencée entre la paroi latérale déflectrice 31 et l'axe de rotation 58.

La distance entre la paroi latérale intérieure 21 et la paroi latérale déflectrice 31 est supérieure à 5% de la distance entre la paroi latérale intérieure 21 et l'axe de rotation 58, et de préférence supérieure à 10% de la distance entre la paroi latérale intérieure 21 et l'axe de rotation 58.

Dans l'exemple de réalisation illustré sur les figures, la distance entre la paroi latérale intérieure 21 et la paroi latérale déflectrice 31 est supérieure à 20% de la distance entre la paroi latérale intérieure 21 et l'axe de rotation 58.

Plus particulièrement dans l'exemple de réalisation illustré sur les figures, l'admission 96 est ménagée dans la face inférieure du corps 30. L'admission 96 présente une ouverture inférieure. L'admission 96 est agencée au dessus du fond 25 du récipient de travail 2. L'admission 96 présente une échancrure latérale 94 agencée entre la paroi latérale déflectrice 31 et l'axe de rotation 58. Le conduit d'évacuation 95 présente ainsi une entrée protégée de manière périphérique par la paroi latérale déflectrice 31.

Tel que bien visible sur la figure 15, l'évacuation 97 du conduit d'évacuation 95 communique avec l'extérieur de l'appareil. Tel que montré sur la figure 15, l'évacuation 97 du conduit d'évacuation 95 débouche en regard de la paroi latérale intérieure 21 du récipient de travail 2 à distance d'un échappement 18 vers l'extérieur de l'appareil.

Plus particulièrement dans l'exemple de réalisation illustré sur les figures, l'évacuation 97 débouche dans une paroi latérale extérieure 32 du couvercle intermédiaire 3. Tel que visible sur la figure 12, l'évacuation 97 débouche sous la bordure extérieure 38. L'évacuation 97 s'étend sur plus du quart de la périphérie du couvercle intermédiaire 3. Pour une meilleure rigidité du couvercle intermédiaire 3 le conduit d'évacuation 95 peut être pourvu d'au moins une nervure interne 98. Le conduit d'évacuation 95 présente ainsi deux sorties au niveau de l'évacuation 97.

Plus particulièrement dans l'exemple de réalisation illustré sur les figures, le décrochement supérieur 26 du bord supérieur 23 du récipient de travail 2 ménage l'échappement 18. Tel que visible sur les figures 3 et 4, le décrochement supérieur 26 est adjacent au montant 10. Le décrochement supérieur 26 s'étend de part et d'autre du montant 10. L'échappement 18 est ménagé entre le récipient de travail 2 et le couvercle intermédiaire 3.

Tel que visible sur les figures 16 et 15, le conduit d'évacuation 95 présente une première portion 95a principalement verticale prolongeant l'admission 96 et une deuxième portion 95b principalement horizontale conduisant à l'évacuation 97. La première portion 95a communique avec la deuxième portion 95b par un passage 99.

Le joint annulaire 9 est monté autour du corps 30 entre une bordure d'appui inférieure 30a et une bordure d'appui supérieure 30b. L'évacuation 97 du conduit d'évacuation 95 débouche au dessus du joint annulaire 9.

Plus particulièrement dans l'exemple de réalisation illustré sur les figures, le joint annulaire 9 comporte une couronne 91 montée entre la bordure d'appui inférieure 30a et la bordure d'appui supérieure 30b. Le joint annulaire 9 comporte une lèvre annulaire 92. Ainsi le joint annulaire 9 est un joint à lèvre. La lèvre annulaire 92 est issue de la couronne 91. Selon une forme de réalisation préférée, le joint annulaire 9 comporte une autre lèvre annulaire 93. L'autre lèvre annulaire 93 est issue de la couronne 91. L'autre lèvre annulaire 93 s'étend au dessus de la lèvre annulaire 92. Ainsi la lèvre annulaire 92 et l'autre lèvre annulaire 93 sont superposées.

Tel que visible sur la figure 3, le joint annulaire 9 vient en appui sur le décrochement annulaire 29 du récipient de travail 2. Plus particulièrement, la lèvre annulaire 92 vient en appui sur le décrochement annulaire 29.

Tel que visible sur la figure 16, le couvercle intermédiaire 3 présente un autre conduit d'évacuation 95' mettant en communication l'enceinte de travail 8 avec l'extérieur de l'appareil. L'autre conduit d'évacuation 95' comporte une autre admission 96' communiquant avec l'enceinte de travail 8 et une autre évacuation 97' communiquant avec l'extérieur de l'appareil.

L'autre l'admission 96' est agencée entre la paroi latérale déflectrice 31 et l'axe de rotation 58. L'autre admission 96' présente une ouverture inférieure. L'axe de rotation 58 est agencé entre l'admission 96 et l'autre admission 96'. L'autre admission 96' présente une autre échancrure latérale 94' agencée entre la paroi latérale déflectrice 31 et l'axe de rotation 58.

L'autre évacuation 97' débouche en regard de la paroi latérale intérieure 21 à distance de l'échappement 18 vers l'extérieur de l'appareil. L'autre évacuation 97' débouche dans la paroi latérale extérieure 32. L'autre évacuation 97' débouche au dessus du joint annulaire 9. L'autre évacuation 97' débouche sous la bordure extérieure 38. Les échancrures périphériques 36 sont agencées entre l'évacuation 97 et l'autre évacuation 97'. L'axe de rotation 58 est agencé entre l'évacuation 97 et l'autre évacuation 97'.

Le couvercle intermédiaire 3 présente avantageusement une symétrie d'ordre 2 par rapport à l'axe de rotation 58.

Le boîtier motorisé supérieur 4 loge un moteur électrique 40 entraînant un réducteur 41 prévu pour entraîner l'accessoire de travail rotatif 57 par l'intermédiaire de l'organe de transmission rotatif 33 du couvercle intermédiaire 3, tel que visible sur la figure 3. Le boîtier motorisé supérieur 4 comporte un capot supérieur 42 assemblé avec un capot inférieur 43. Le capot supérieur 42 forme un pommeau 45 prévu pour la préhension du boîtier motorisé supérieur 4. Tel que visible sur les figures 2 et 3, le moteur électrique 40 s'étend partiellement à l'intérieur du pommeau 45. Le pommeau 45 s'élève au dessus d'une partie circonférentielle 46 du boîtier motorisé supérieur 4, tel que visible sur les figures 1 à 4. Le capot inférieur 43 présente une partie centrale inférieure 48 proéminente.

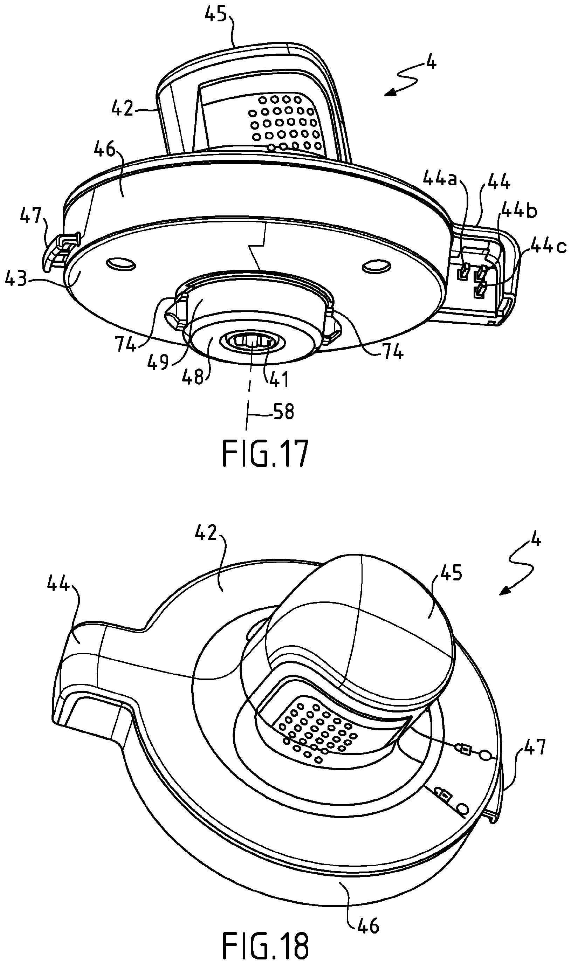

Tel que visible sur la figure 17, le boîtier motorisé supérieur 4 comporte trois broches latérales 44a, 44b, 44c logées en périphérie de la partie circonférentielle 46 du boîtier motorisé supérieur 4. Deux des broches latérales 44a, 44b, 44c sont prévues pour alimenter électriquement le moteur électrique 40, la troisième étant prévue pour mettre à la terre le moteur électrique 40. Les broches latérales 44a, 44b, 44c s'étendent transversalement sous un prolongement 44 du capot supérieur 42. Ainsi les broches latérales 44a, 44b, 44c sont agencées tangentiellement par rapport à l'ouverture supérieure du récipient de travail 2. Les broches latérales 44a, 44b, 44c s'étendent transversalement par rapport à l'axe de rotation 58. Deux des broches latérales 44a, 44b, 44c sont agencées à une distance identique de l'axe de rotation 58 mais à des niveaux différents, la troisième étant agencée au même niveau que la broche latérale la plus élevée, mais en étant plus proche de l'axe de rotation 58. Le prolongement 44 forme une corne et ménage une ouverture latérale et inférieure prévue pour le passage du connecteur électrique de motorisation 11 du montant 10.

Le boîtier motorisé supérieur 4 disposé sur le récipient de travail 2 peut être tourné sur le récipient de travail 2 pour amener le connecteur électrique de motorisation 11 en prise avec les broches latérales 44a, 44b, 44c du boîtier motorisé supérieur 4 et alimenter électriquement le boîtier motorisé supérieur 4.

Le boîtier motorisé supérieur 4 comporte une patte de verrouillage 47 agencée en périphérie de la partie circonférentielle 46. Plus particulièrement, la patte de verrouillage 47 est agencée à l'opposé du prolongement 44, tel que bien visible sur la figure 18.

Le boîtier motorisé supérieur 4 est verrouillé par baïonnette avec le couvercle intermédiaire 3 et peut occuper par rotation sur le couvercle intermédiaire 3 successivement une position déverrouillée et une position verrouillée. A cet effet le boîtier motorisé supérieur 4 présente des ergots extérieurs 74 prévus pour être engagés sous les collerettes internes 75 du couvercle intermédiaire 3. Les ergots extérieurs 74 sont agencées sur une paroi latérale 49 de la partie centrale inférieure 48 du boîtier motorisé supérieur 4.

Le boîtier motorisé supérieur 4 est verrouillé avec le montant 10 par rotation autour de l'axe de rotation 58. Le boîtier motorisé supérieur 4 est verrouillé avec le récipient de travail 2 par rotation autour de l'axe de rotation 58. Le boîtier motorisé supérieur 4 est verrouillé avec la poignée 80 du récipient de travail 2 par rotation autour de l'axe de rotation 58. La patte de verrouillage 47 du boîtier motorisé supérieur 4 est engagée dans un logement de verrouillage 81 de la poignée 80. Le boîtier motorisé supérieur 4 est verrouillé de manière opposée d'une part avec le montant 10 et d'autre part avec le récipient de travail 2, par rotation autour de l'axe de rotation 58.

L'appareil électroménager de préparation culinaire illustré sur les figures s'utilise et fonctionne de la manière suivante.

L'utilisateur dispose les aliments dans le récipient de travail 2 contenant l'accessoire de travail rotatif 57, met en place le couvercle intermédiaire 3 et le boîtier motorisé supérieur 4, et met en marche l'appareil, notamment le dispositif de chauffe électrique 6.

Lorsque la chauffe des aliments contenus dans le récipient de travail 2 conduit à des projections ou à une élévation du niveau de la préparation dans l'enceinte de travail 8, notamment du fait d'un moussage, des matières alimentaires, du liquide et/ou de la vapeur peuvent s'introduire dans le conduit d'évacuation 95 et dans l'autre conduit d'évacuation 95'. La pression de vapeur régnant dans l'enceinte de travail 8 peut alors propulser des rejets hors du conduit d'évacuation 95 et de l'autre conduit d'évacuation 95'. Ces rejets sont toutefois propulsés contre la paroi latérale intérieure 21 du récipient de travail 2, ce qui contribue à maîtriser leur vitesse de progression hors de l'appareil. Ces rejets peuvent s'écouler ou s'échapper hors de l'appareil par l'échappement 18, ce qui contribue à une meilleure sécurité en cas de débordement. Le chemin d'évacuation des rejets empreintant le conduit d'évacuation 95 ou l'autre conduit d'évacuation 95' puis chemine entre le couvercle intermédiaire 3 et le récipient de travail 2. Ce chemin d'évacuation forme ainsi un coude s'étendant dans un plan perpendiculaire à l'axe de rotation 58, ce qui permet de diminuer la vitesse d'évacuation des rejets hors de l'appareil.

A titre de variante, l'échappement 18 n'est pas nécessairement ménagé entre le récipient de travail 2 et le couvercle intermédiaire 3. L'échappement 18 pourrait notamment être ménagé entre le récipient de travail 2 et le boîtier motorisé supérieur 4.

A titre de variante, l'appareil électroménager de préparation culinaire selon l'invention ne comporte pas nécessairement une base 1 alimentant électriquement un dispositif de chauffe électrique 6 porté par le récipient de travail 2. Le dispositif de chauffe électrique 6 peut notamment être porté par la base 1, pour chauffer le récipient de travail 2 disposé sur la base 1.

A titre de variante, l'appareil électroménager de préparation culinaire selon l'invention ne comporte pas nécessairement une base 1 alimentant électriquement le boîtier motorisé supérieur 4. Le boîtier motorisé supérieur 4 peut notamment comporter ou recevoir un cordon d'alimentation électrique.

A titre de variante, le conduit d'évacuation 95 et/ou l'autre conduit d'évacuation 95' peu(ven)t présenter au moins une entrée et/ou au moins une sortie.

A titre de variante, l'appareil électroménager de préparation culinaire selon l'invention ne comporte pas nécessairement un autre conduit d'évacuation 95'.

La présente invention n'est nullement limitée à l'exemple de réalisation décrit et à ses variantes, mais englobe de nombreuses modifications dans le cadre des revendications.

## Revendications

1. Appareil électroménager de préparation culinaire chauffant comportant un récipient de travail (2), un accessoire de travail rotatif (57) disposé dans le récipient de travail (2), un boîtier motorisé supérieur (4) pour entraîner en rotation l'accessoire de travail rotatif (57) selon un axe de rotation (58), un dispositif de chauffe électrique (6) pour chauffer les aliments contenus dans le récipient de travail (2), un couvercle intermédiaire (3) porté par le récipient de travail (2), une enceinte de travail (8) étant définie par le récipient de travail (2) et le couvercle intermédiaire (3), le couvercle intermédiaire (3) présentant un conduit d'évacuation (95) mettant en communication l'enceinte de travail (8) avec l'extérieur de l'appareil, le conduit d'évacuation (95) comportant une admission (96) communiquant avec l'enceinte de travail (8) et une évacuation (97) communiquant avec l'extérieur de l'appareil, **caractérisé en ce que** l'évacuation (97) débouche en regard d'une paroi latérale intérieure (21) du récipient de travail (2) à distance d'un échappement (18) vers l'extérieur de l'appareil.

2. Appareil électroménager de préparation culinaire chauffant selon la revendication 1, **caractérisé en ce que** l'échappement (18) est ménagé entre le récipient de travail (2) et le couvercle intermédiaire (3).

3. Appareil électroménager de préparation culinaire chauffant selon l'une des revendications 1 ou 2, **caractérisé en ce que** le récipient de travail (2) présente un bord supérieur (23) présentant un décrochement supérieur (26) ménageant l'échappement (18).

4. Appareil électroménager de préparation culinaire chauffant selon l'une des revendications 1 à 3, **caractérisé en ce qu'**il comporte une base (1) recevant le récipient de travail (2) et **en ce que** la base (1) comporte un montant (10) présentant un connecteur électrique de motorisation (11) pour alimenter électriquement le boîtier motorisé supérieur (4).

5. Appareil électroménager de préparation culinaire chauffant selon les revendications 3 et 4, **caractérisé en ce que** le décrochement supérieur (26) est adjacent au montant (10).

6. Appareil électroménager de préparation culinaire chauffant selon les revendications 3 et 4, **caractérisé en ce que** le décrochement supérieur (26) s'étend de part et d'autre du montant (10).

7. Appareil électroménager de préparation culinaire chauffant selon l'une des revendications 4 à 6, **caractérisé en ce que** le dispositif de chauffe électrique (6) est porté par le récipient de travail (2) et **en ce que** la base (1) comporte un connecteur électrique de chauffe (15) pour alimenter électriquement le dispositif de chauffe électrique (6) lorsque le récipient de travail (2) est disposé sur la base (1).

8. Appareil électroménager de préparation culinaire chauffant selon l'une des revendications 1 à 7, **caractérisé en ce que** l'évacuation (97) débouche dans une paroi latérale extérieure (32) du couvercle intermédiaire (3).

9. Appareil électroménager de préparation culinaire chauffant selon l'une des revendications 1 à 8, **caractérisé en ce que** le couvercle intermédiaire (3) porte un organe de transmission rotatif (33) entrainé en rotation par le boîtier motorisé supérieur (4) et entraînant en rotation l'accessoire de travail rotatif (57) disposé dans le récipient de travail (2).

10. Appareil électroménager de préparation culinaire chauffant selon l'une des revendications 1 à 9, **caractérisé en ce que** le couvercle intermédiaire (3) comprend un joint annulaire (9) venant en appui périphérique à l'intérieur du récipient de travail (2) et **en ce que** l'évacuation (97) débouche au dessus du joint annulaire (9)

11. Appareil électroménager de préparation culinaire chauffant selon la revendication 10, **caractérisé en ce que** le joint annulaire (9) comporte une lèvre annulaire (92) venant en appui périphérique à l'intérieur du récipient de travail (2).

12. Appareil électroménager de préparation culinaire chauffant selon la revendication 11, **caractérisé en ce que** le joint annulaire (9) comporte une autre lèvre annulaire (93) s'étendant au dessus de la lèvre annulaire (92).

13. Appareil électroménager de préparation culinaire chauffant selon l'une des revendications 1 à 12, **caractérisé en ce que** le couvercle intermédiaire (3) présente un autre conduit d'évacuation (95') mettant en communication l'enceinte de travail (8) avec l'extérieur de l'appareil, l'autre conduit d'évacuation (95') comportant une autre admission (96') communiquant avec l'enceinte de travail (8) et une autre évacuation (97') communiquant avec l'extérieur de l'appareil, l'autre évacuation (97') débouchant en regard de la paroi latérale intérieure (21) du récipient de travail (2) à distance de l'échappement (18) vers l'extérieur de l'appareil.

14. Appareil électroménager de préparation culinaire chauffant selon la revendication 13, **caractérisé en ce que** l'axe de rotation (58) est agencé entre l'évacuation (97) et l'autre évacuation (97').

15. Appareil électroménager de préparation culinaire chauffant selon l'une des revendications 13 ou 14 lorsque dépendant de la revendication 8, **caractérisé en ce que** l'autre évacuation (97') débouche dans la paroi latérale extérieure (32) du couvercle intermédiaire (3).

16. Appareil électroménager de préparation culinaire chauffant selon l'une des revendications 13 à 15 lorsque dépendant de l'une des revendications 10 à 12, **caractérisé en ce que** l'autre évacuation (97') débouche au dessus du joint annulaire (9).

17. Appareil électroménager de préparation culinaire chauffant selon l'une des revendications 1 à 16, **caractérisé en ce que** le récipient de travail (2) présente un fond (25) et comporte un organe de centrage (28) s'élevant à partir du fond (25), et **en ce que** l'accessoire de travail rotatif (57) est monté sur l'organe de centrage (28).

## Patentansprüche

1. Elektrohaushaltsgerät zur wärmenden Nahrungszubereitung, umfassend einen Arbeitsbehälter (2), ein in dem Arbeitsbehälter (2) angeordnetes drehbares Arbeitszubehör (57), ein oberes motorisiertes Gehäuse (4) zum Drehantrieb des drehbaren Arbeitszubehörs (57) gemäß einer Drehachse (58), eine elektrische Erwärmungsvorrichtung (6) zum Erwärmen der in dem Arbeitsbehälter (2) enthaltenen Lebensmittel, einen durch den Arbeitsbehälter (2) getragenen zwischenliegenden Deckel (3), ein Arbeitsgefäß (8), das durch den Arbeitsbehälter (2) und den zwischenliegenden Deckel (3) definiert ist, wobei der zwischenliegende Deckel (3) eine Abführungsleitung (95) aufweist, die das Arbeitsgefäß (8) mit der Außenseite des Geräts in Verbindung bringt, wobei die Abführungsleitung (95) einen mit dem Arbeitsgefäß (8) in Verbindung stehenden Einlass (96) und eine mit der Außenseite des Geräts in Verbindung stehende Abführung (97) umfasst, **dadurch gekennzeichnet, dass** die Abführung (97) einer inneren Seitenwand (21) des Arbeitsbehälters (2) zugewandt mit Abstand zu einem Auslass (18) in Richtung der Außenseite des Geräts mündet.

2. Elektrohaushaltsgerät zur wärmenden Nahrungszubereitung nach Anspruch 1, **dadurch gekennzeichnet, dass** der Auslass (18) zwischen dem Arbeitsbehälter (2) und dem zwischenliegenden Deckel (3) ausgebildet ist.

3. Elektrohaushaltsgerät zur wärmenden Nahrungszubereitung nach einem der Ansprüche 1 oder 2, **dadurch gekennzeichnet, dass** der Arbeitsbehälter (2) einen oberen Rand (23) aufweist, der einen oberen Absatz (26) aufweist, der den Auslass (18) ausbildet.

4. Elektrohaushaltsgerät zur wärmenden Nahrungszubereitung nach einem der Ansprüche 1 bis 3, **dadurch gekennzeichnet, dass** es eine Basis (1) umfasst, die den Arbeitsbehälter (2) aufnimmt, und dadurch, dass die Basis (1) einen Ständer (10) umfasst, der ein elektrisches Motorisierungsverbindungsstück (11) zum elektrischen Versorgen des oberen motorisierten Gehäuses (4) umfasst.

5. Elektrohaushaltsgerät zur wärmenden Nahrungszubereitung nach einem der Ansprüche 3 und 4, **dadurch gekennzeichnet, dass** der obere Absatz (26) dem Ständer (10) benachbart ist.

6. Elektrohaushaltsgerät zur wärmenden Nahrungszubereitung nach einem der Ansprüche 3 und 4, **dadurch gekennzeichnet, dass** der obere Absatz (26) sich auf beiden Seiten des Ständers (10) erstreckt.

7. Elektrohaushaltsgerät zur wärmenden Nahrungszubereitung nach einem der Ansprüche 4 bis 6, **dadurch gekennzeichnet, dass** die elektrische Erwärmungsvorrichtung (6) von dem Arbeitsbehälter (2) getragen wird, und dadurch, dass die Basis (1) ein elektrisches Erwärmungsverbindungsstück (15) zum elektrischen Versorgen der elektrischen Erwärmungsvorrichtung (6), wenn der Arbeitsbehälter (2) auf der Basis (1) angeordnet ist, umfasst.

8. Elektrohaushaltsgerät zur wärmenden Nahrungszubereitung nach einem der Ansprüche 1 bis 7, **dadurch gekennzeichnet, dass** die Abführung (97) in einer äußeren Seitenwand (32) des zwischenliegenden Deckels (3) mündet.

9. Elektrohaushaltsgerät zur wärmenden Nahrungszubereitung nach einem der Ansprüche 1 bis 8, **dadurch gekennzeichnet, dass** der zwischenliegende Deckel (3) ein durch das obere motorisierte Gehäuse (4) zur Drehung angetriebene Drehgetriebe-Bauteil (33) und das in dem Arbeitsbehälter (2) angeordnete drehbare Arbeitszubehör (57) drehend antreibend trägt.

10. Elektrohaushaltsgerät zur wärmenden Nahrungszubereitung nach einem der Ansprüche 1 bis 9, **dadurch gekennzeichnet, dass** der zwischenliegende Deckel (3) eine ringförmige Dichtung (9) beinhaltet, die am Inneren des Arbeitsbehälters (2) umlaufend zur Auflage kommt, und dadurch, dass die Abführung (97) über der ringförmigen Dichtung (9) mündet

11. Elektrohaushaltsgerät zur wärmenden Nahrungszubereitung nach Anspruch 10, **dadurch gekennzeichnet, dass** die ringförmige Dichtung (9) eine ringförmige Lippe (92) umfasst, der im Inneren des Arbeitsbehälters (2) zur umlaufenden Auflage kommt.

12. Elektrohaushaltsgerät zur wärmenden Nahrungszubereitung nach Anspruch 11, **dadurch gekennzeichnet, dass** die ringförmige Dichtung (9) eine andere ringförmige Lippe (93) umfasst, die sich über die ringförmige Lippe (92) erstreckt.

13. Elektrohaushaltsgerät zur wärmenden Nahrungszubereitung nach einem der Ansprüche 1 bis 12, **dadurch gekennzeichnet, dass** der zwischenliegende Deckel (3) eine andere Abführungsleitung (95') aufweist, die das Arbeitsgefäß (8) mit der Außenseite des Geräts in Verbindung bringt, wobei die andere Abführungsleitung (95') einen anderen Einlass (96') in Verbindung mit dem Arbeitsgefäß (8) und eine andere Abführung (97') in Verbindung mit der Außenseite des Geräts umfasst, wobei die andere Abführung (97') der inneren Seitenwand (21) des Arbeitsgefäßes (2) zugewandt mit Abstand von dem Auslass (18) in Richtung zur Außenseite des Geräts mündet.

14. Elektrohaushaltsgerät zur wärmenden Nahrungszubereitung nach Anspruch 13, **dadurch gekennzeichnet, dass** die Drehachse (58) zwischen der Abführung (97) und der anderen Abführung (97') angebracht ist.

15. Elektrohaushaltsgerät zur wärmenden Nahrungszubereitung nach einem der Ansprüche 13 oder 14, wenn abhängig von Anspruch 8, **dadurch gekennzeichnet, dass** die andere Abführung (97') in der äußeren Seitenwand (32) des zwischenliegenden Deckels (3) mündet.

16. Elektrohaushaltsgerät zur wärmenden Nahrungszubereitung nach einem der Ansprüche 13 bis 15, wenn abhängig von einem der Ansprüche 10 bis 12, **dadurch gekennzeichnet, dass** die andere Abführung (97') über der ringförmigen Dichtung (9) mündet.

17. Elektrohaushaltsgerät zur wärmenden Nahrungszubereitung nach einem der Ansprüche 1 bis 16, **dadurch gekennzeichnet, dass** der Arbeitsbehälter (2) einen Boden (25) aufweist und ein Zentrierungsbauteil (28) umfasst, das sich vom Boden (25) ausgehend erhebt, und dadurch, dass das drehbare Arbeitszubehör (57) auf dem Zentrierungsbauteil (28) montiert ist.

## Claims

1. Heating household appliance for food preparation comprising a work container (2), a rotating work accessory (57) arranged in the work container (2), an upper motorised casing (4) to rotate the rotating work accessory (57) about a rotation axis (58), an electric heating device (6) for heating food contained in the work container (2), an intermediate cover (3) carried by the work container (2), a work chamber (8) being defined by the work container (2) and the intermediate cover (3), the intermediate cover (3) having a discharge duct (95) placing the work chamber (8) in communication with the outside of the appliance, the discharge duct (95) comprising an inlet (96) communicating with the work chamber (8) and a discharge aperture (97) communicating with the outside of the appliance, **characterised in that** the discharge aperture (97) opens out opposite an inner side wall (21) of the work container (2), spaced from an outlet (18) opening to the outside of the appliance.

2. Heating household appliance for food preparation according to claim 1, **characterised in that** the outlet (18) is arranged between the work container (2) and the intermediate cover (3).

3. Heating household appliance for food preparation according to one of claims 1 or 2, **characterised in that** the work container (2) has an upper edge (23) having an upper cavity (26) arranging the outlet (18).

4. Heating household appliance for food preparation according to one of claims 1 to 3, **characterised in that** it comprises a base (1) receiving the work container (2) and **in that** the base (1) comprises a mount (10) having an electric motorisation connector (11) to electrically supply the upper motorised casing (4).

5. Heating household appliance for food preparation according to claims 3 and 4, **characterised in that** the upper cavity (26) is adjacent to the mount (10).

6. Heating household appliance for food preparation according to claims 3 and 4, **characterised in that** the upper cavity (26) extends on either side of the mount (10).

7. Heating household appliance for food preparation according to one of claims 4 to 6, **characterised in that** the electric heating device (6) is carried by the work container (2) and **in that** the base (1) comprises an electric heating connector (15) to electrically supply the electric heating device (6) when the work container (2) is arranged on the base (1).

8. Heating household appliance for food preparation according to one of claims 1 to 7, **characterised in that** the discharge aperture (97) opens out into an outer side wall (32) of the intermediate cover (3).

9. Heating household appliance for food preparation according to one of claims 1 to 8, **characterised in that** the intermediate cover (3) carries a rotating transmission member (33) rotated by the upper motorised casing (4) and rotating the rotating work accessory (57) arranged in the work container (2).

10. Heating household appliance for food preparation according to one of claims 1 to 9, **characterised in that** the intermediate cover (3) comprises an annular seal (9) peripherally bearing inside the work container (2) and **in that** the discharge aperture (97) opens out above the annular seal (9).

11. Heating household appliance for food preparation according to claim 10, **characterised in that** the annular seal (9) comprises an annular lip (92) peripherally bearing inside the work container (2).

12. Heating household appliance for food preparation according to claim 11, **characterised in that** the annular seal (9) comprises another annular lip (93) extending above the annular lip (92).

13. Heating household appliance for food preparation according to one of claims 1 to 12, **characterised in that** the intermediate cover (3) has another discharge duct (95') placing the work chamber (8) in communication with the outside of the appliance, the other discharge duct (95') comprising another inlet (96') communicating with the work chamber (8) and another discharge aperture (97') communicating with the outside of the appliance, the other discharge aperture (97') opening out opposite the inner side wall (21) of the work container (2) spaced from the outlet (18) opening to the outside of the appliance.

14. Heating household appliance for food preparation according to claim 13, **characterised in that** the rotation axis (58) is arranged between the discharge aperture (97) and the other discharge aperture (97').

15. Heating household appliance for food preparation according to one of claims 13 or 14 when depending on claim 8, **characterised in that** the other discharge aperture (97') opens out into the outer side wall (32) of the intermediate cover (3).

16. Heating household appliance for food preparation according to one of claims 13 to 15 when depending on one of claims 10 to 12, **characterised in that** the other discharge aperture (97') opens out above the annular seal (9).

17. Heating household appliance for food preparation according to one of claims 1 to 16, **characterised in that** the work container (2) has a bottom (25) and comprises a centring member (28) extending from the bottom (25), and **in that** the rotating work accessory (57) is mounted on the centring member (28).
